# EUROPEAN PATENT APPLICATION

(11) **EP 4 044 652 A1**
(43) Date of publication of application: **17.08.2022**
(21) Application number: 20909310.3
(22) Date of filing: 28.07.2020
(51) Int. Cl.: H04W 24/00, G06F 11/32

(54) **TEMRINAL 5G ICON DISPLAY METHOD, DEVICE AND COMPUTER-READABLE MEDIUM**

(30) Priority: 30.12.2019 CN 201911393789
(71) Applicant: ZTE Corporation, Shenzhen, Guangdong 518057 (CN)
(72) Inventor: LIN, Xiaoshu, Shenzhen, Guangdong 518057 (CN); XUE, Zitao, Shenzhen, Guangdong 518057 (CN)
(74) Representative: Canzler & Bergmeier Patentanwälte Partnerschaft mbB
(86) International application number: PCT/CN2020/105054
(87) International publication number: WO 2021/135188

(57) **Abstract**

Disclosed in the embodiments of the present disclosure are a method and a device for displaying a 5G icon on a terminal, and a computer-readable medium, relating to the field of 5G communications, wherein the method comprises: after accessing a 4G network, the terminal determines whether an upper layer indication information (ULI) from a base station is received; if it is determined that no ULI from the base station is received, the terminal determines whether a slave station resource SCG record is acquired; and when it is determined that the SCG record is acquired, the terminal displays the 5G icon.

## Description

### TECHNICAL FIELD

The present disclosure relates to, but is not limited to, the field of 5G communication technology.

### BACKGROUND

At present, 5G terminals are still in their infancy, and 5G terminals have not been available for a long time. In some cases, in actual use, 5G resources can be allocated, but a 4G icon is displayed, so that users cannot know what network they are using according to the actual service.

### SUMMARY

An embodiment of the present disclosure provides a method for displaying a 5G icon on a terminal. The method includes: after accessing a 4G network, the terminal judging whether an upper layer indicator (ULI) from a base station is received; if the ULI from the base station is not received, the terminal determining whether a secondary cell group (SCG) record is acquired; and when determining that the SCG record is acquired, the terminal displaying the 5G icon.

An embodiment of the present disclosure provides a device for displaying a 5G icon on a terminal. The device includes: a judgment module configured to judge whether a ULI from a base station is received, after accessing a 4G network; a determination module configured to determine whether an SCG record is acquired, in response to the ULI from the base station being not received; and a display module configured to display the 5G icon, when determining that the SCG record is acquired.

An embodiment of the present disclosure provides an equipment for displaying a 5G icon on a terminal, including a memory, a processor and a computer program stored on the memory and capable of running on the processor, wherein when the computer program is executed by the processor, the processor implements the above method for displaying a 5G icon on a terminal.

An embodiment of the present disclosure provides a computer readable medium storing thereon a program for displaying a 5G icon on a terminal which, when executed by a processor, cause the processor to implement the above method for displaying a 5G icon on a terminal.

### BRIEF DESCRIPTION OF DRAWINGS

Figs. 1A, 1B, and 1C are schematic diagrams of a system structure of the 5G option 3/3a/3x, respectively;
Fig. 2 is a schematic flowchart of displaying a 5G icon on a terminal according to the present disclosure;
Fig. 3 is a schematic structure diagram of a system for displaying a 5G icon on a terminal according to the present disclosure;
Fig. 4 is a specific flowchart of displaying a 5G icon on a terminal according to the present disclosure;
Fig. 5 is a schematic structure diagram of a device for displaying a 5G icon on a terminal according to the present disclosure; and
Fig. 6 is a schematic structure diagram of an equipment for displaying a 5G icon on a terminal according to the present disclosure.

### DETAIL DESCRIPTION OF EMBODIMENTS

The embodiments of the present disclosure will be described in detail below with reference to the accompanying drawings. It should be understood that the embodiments described below are only used to illustrate and explain the present disclosure, and are not intended to limit the present disclosure.

Currently, most operators deploying 5G NSA (non-standalone) in the world choose option 3/3x/3a. Under the 5G option 3/3x/3a network architecture, according to the 5G standard, the core network will display a 5G icon in two cases: 1. The equipment is resided in SA E-UTRA (Standalone Evolved Universal Mobile Telecommunications System Terrestrial Radio Access Network) cell connected to 5GC (5G Core Network); 2. The equipment is resided on NG-RAN (5G Radio Access Network) connected to 5GC. The considerations for the core network are in line with the definition of NG-RAN in 3GPP TS 23.501 V1.4.0 (SA NR (New Radio) is connected to 5GC; SA E-UTRA is connected to 5GC; NR is a master with E-UTRA extension, and E-UTRA is a master with NR extension).

The conditions under which the 5G icon is displayed by the core network is shown in the following table. In the following table, for Config.D, the first state does not support NSA, that is, does not relate to 5G, that is, it is a 4G base station. In the 5G option 3/3x/3a, the 5G icons are displayed according to a judgment of Config.D, that is, the operators currently display the 5G icon according to Config.D. The basis for judging whether to display the 5G icon is the ULI. If the base station equipment used in the network of the operator does not issue the ULI, the mobile terminal will not display the 5G icon. The ULI is optional for the base station to broadcast SIB2, that is, the 4G standard does not stipulate that the base station must issue the ULI, but Config.D relies on the ULI to judge whether to display the 5G icon. Thus, when the base station does not issue the ULI, the terminal does not display the 5G icon. However, the actual situation is that the 5G resource can be allocated, but a 4G icon is displayed, so that the user cannot know what network is used according to the actual service obtained.

| State | Config.A | Config.B | Config. C | Config. D |
|---|---|---|---|---|
| 1 (IDLE under or Connected to LTE cell not supporting NSA) | 4G | 4G | 4G | 4G |
| 2 (IDLE under or Connected to LTE cell supporting NSA and no detection of NR coverage) | 4G | 4G | 4G | 5G |
| 3 (Connected to LTE only under LTE cell supporting NSA and detection of NR coverage) | 4G | 4G | 5G | 5G |
| 4 (IDLE under LTE cell supporting NSA and detection of NR coverage) | 4G | 5G | 5G | 5G |
| 5 (Connected to LTE + NR under LTE cell supporting NSA) | 5G | 5G | 5G | 5G |
| 6 (IDLE under or connected to NG-RAN while attached to 5GC) | 5G | 5G | 5G | 5G |

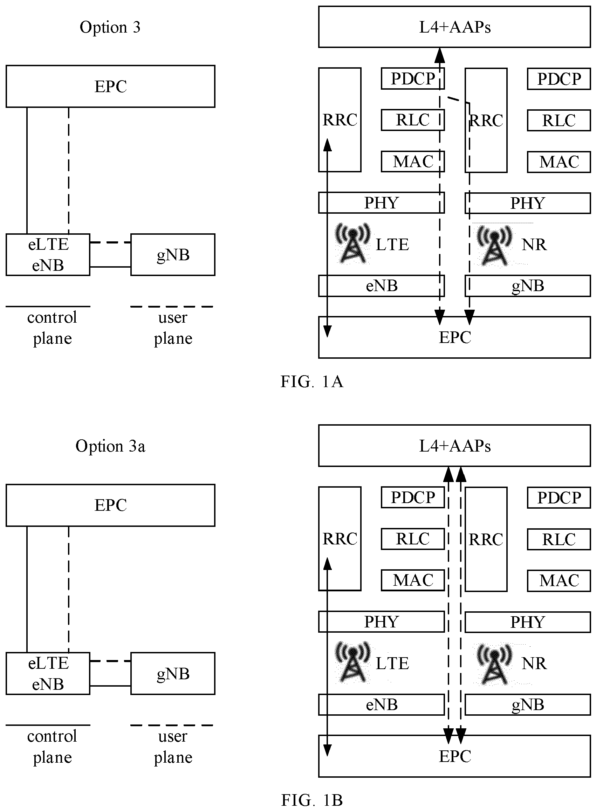

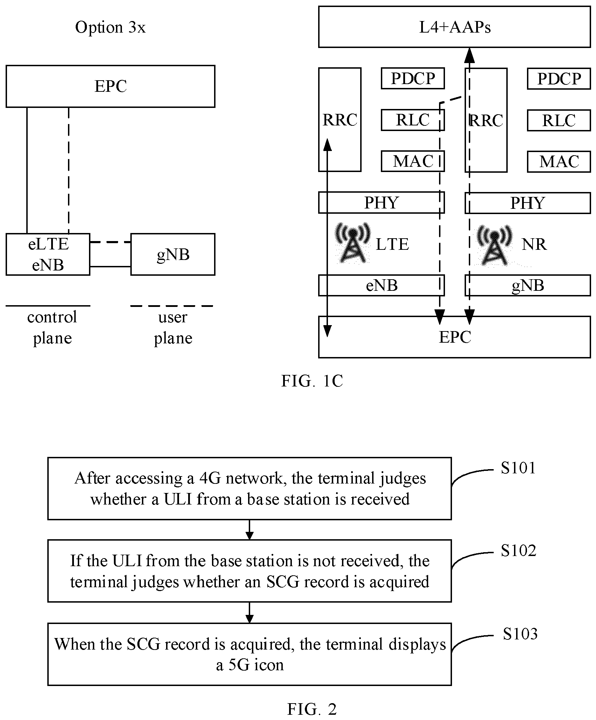

From the system structure of 5G option 3/3a/3x, as shown in Figs. 1A, 1B and 1C, master base stations of 5G option 3/3a/3x are all 4G base stations, and 5G base stations are used as secondary base stations. When the equipment is turned on and looks for a 4G base station, not every 4G base station will have a 5G secondary base station, so how does the equipment know that this is a 4G anchor base station? At present, the direct recognition information is the ULI issued by the base station. With this mark, it is determined that there are 5G resources available, and the equipment will directly display the 5G icon. However, it does not mean that if the 4G anchor base station does not issue the ULI mark, the 4G anchor base station will not allocate 5G resources to a terminal. At this time, a situation will occur that the terminal is using 5G resources while the 5G icon is not displayed.

A method and a device for displaying a 5G icon on a terminal, and a computer readable medium according to the present disclosure solve the problem that the 5G icon is not displayed when the base station does not issue a ULI.

Fig. 2 is a schematic flowchart of displaying a 5G icon on a terminal according to the present disclosure. As shown in Fig. 2, the method may include the following operations S101 to S103.

In operation S101, after accessing a 4G network, the terminal judges whether a ULI from a base station is received.

In operation S102, if the ULI from the base station is not received, the terminal determines whether an SCG record is acquired.

In operation S103, when it is determined that the SCG record is acquired, the terminal displays a 5G icon.

In this way, the terminal can determine, according to the SCG record, that this base station (i.e., the 4G anchor base station) can allocate the 5G resources to the terminal, and the terminal displays the 5G icon, so that the user can understand the network type used by the terminal according to the actual service obtained, which improves the user experience.

Under the 5G option 3/3x/3a network architecture, the ULI is the basis for Config.D to judge whether to display the network icon. However, there is a case that the base station does not issue the ULI. The present disclosure uses the above operations to realize that, when the base station can allocate 5G resources but does not issue the ULI, the terminal displays the actual network type according to the actual situation, so that the mobile terminal user knows that the 5G network is being used.

In an implementation, the operation of judging, by the terminal, whether the ULI from the base station is received (i.e., operation S101) includes: receiving, by the terminal, a SIB2 issued by the base station, and judging whether the SIB2 carries the ULI. That is, the terminal can judge whether the base station issues the ULI according to the SIB2.

In an implementation, the operation of determining, by the terminal, whether the SCG record is acquired (i.e., operation S102) includes: using, by the terminal, the 5G resources allocated by the base station to access a 5G network, and obtaining the SCG record (i.e., the SCG allocation record) after successfully accessing the 5G network. The above 5G resources are allocated by the base station, which can be allocated blindly by the base station, or allocated to the terminal after the terminal reports a B1 event. For the latter, the terminal can acquire 5G resources by the following operations: performing, by the terminal, 5G signal measurement; reporting the B1 event when the 5G signal meets a condition for reporting the B1 event; and acquiring the 5G resources after the B1 event is reported.

In an implementation, the method may further include: after successfully accesses the 5G network, recording, by the terminal, the base station as an anchor base station, so as to directly display the 5G icon when accessing the base station again. Specifically, when the terminal accesses the base station again, it queries whether the base station is an anchor base station, and if the base station is the anchor base station, the 5G icon is directly displayed. That is to say, currently, whether the 5G icon will be displayed is judged based on Config.D, and the judgment basis for Config.D is ULI. Therefore, once the anchor base station does not issue a ULI, the terminal will not display the 5G icon. But this is inconsistent with the fact that the 5G resources can be allocated to the terminal actually. To this end, the terminal in the present disclosure further displays the 5G icon according to the SCG record, that is, regardless of whether the base station issues a ULI or not, as long as the base station can allocate 5G resources, the terminal will display the 5G icon according to an actual record, and will display the 5G icon in the future under such a base station, so that the user can know the actual situation of the network type used by the mobile terminal.

In an implementation, the method may further include: if the ULI from the base station is received, displaying, by the terminal, the 5G icon; if the ULI from the base station is not received and the SCG record is not obtained, displaying, by the terminal, a 4G icon.

Under the 5G option 3/3x/3a network architecture, the 4G base station is used as an anchor cell. If the base station equipment does not issue ULI, Config.D cannot obtain the ULI information, and the mobile terminal will display the 4G icon. However, the 4G base station serving as the anchor cell can allocate 5G resources. In this application scenario, the present disclosure further uses the SCG record to display the 5G icon when Config.D cannot obtain the ULI information.

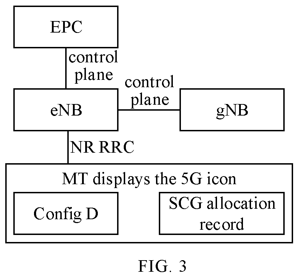

Fig. 3 is a schematic structure diagram of a system for displaying a 5G icon on a terminal according to the present disclosure. As shown in Fig. 3, under the 5G option 3/3x/3a network architecture, a master base station is a 4G base station (eNB) and a secondary base station is a 5G base station (gNB). The 4G base station is used as an anchor cell. If the base station equipment does not issue ULI information while a terminal (MT) may obtain 5G resources actually, in this case, the terminal uses the obtained SCG record as a supplement to the basis for Config.D to display the 5G icon. When the terminal is actually allocated with the 5G resources, the terminal will display the 5G icon, regardless of whether Config.D obtains the ULI issued by the base station or not.

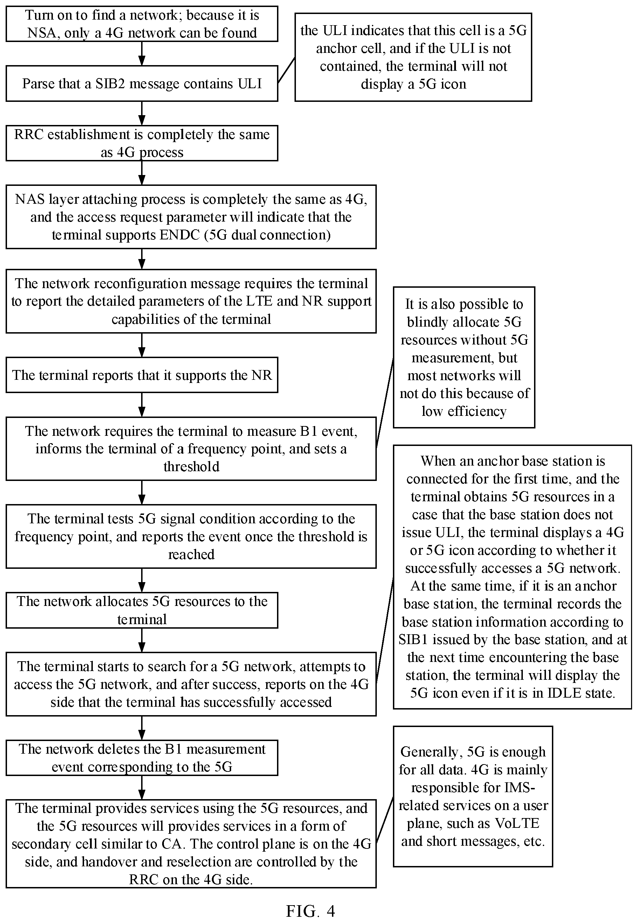

Fig. 4 is a specific flowchart of displaying a 5G icon on a terminal according to the present disclosure. As shown in Fig. 4, the flow may include the following operations 1 to 12.

Operation 1, a terminal is turned on to find a network; because it is NSA (5G non-standalone), the terminal only finds a 4G network.

Operation 2, the terminal parses whether a SIB2 message issued by the base station contains ULI; the ULI indicates that this cell is a 5G anchor cell, and if the ULI is not contained, the terminal will not display a 5G icon.

Operation 3, RRC connection is estahblished; this process is the same as the 4G and will not be repeated here.

Operation 4, NAS (non-access) layer attaching process is performed, which is the same as the 4G and will not be repeated here. The access request parameter will indicate that the terminal supports ENDC (5G dual connection).

Operation 5, the network reconfiguration message requires the terminal to report the detailed parameters of the LTE (Long Term Evolution) and NR (New Radio) support capabilities of the terminal.

Operation 6, the terminal reports that it supports the NR.

Operation 7, the network requires the terminal to measure B1 event, informs the terminal of a frequency point, and sets a threshold.

Operation 8, the terminal tests 5G signal condition according to the frequency point, and reports the event once the threshold is reached.

Operation 9, the network allocates 5G resources to the terminal.

It should be noted that, in theory, it is also possible to blindly allocate the 5G resources without 5G measurement, but most networks will not do this because of low efficiency.

Operation 10, the terminal starts to search for a 5G network, attempts to access the 5G network, and after success, reports on the 4G side that the terminal has successfully accessed.

When the terminal is connected to an anchor base station for the first time, and the terminal obtains 5G resources in a case that the base station does not issue ULI, the terminal displays a 4G or 5G icon according to whether it successfully accesses a 5G network. That is, for a base station that does not issue a ULI when the terminal is connected for the first time, the terminal displays the network icon of the terminal as 4G or 5G by judging whether it obtains an allocation of 5G resources.

If the base station is an anchor base station, the terminal records the base station information according to SIB1 issued by the base station, and at the next time encountering the base station, the terminal will display the 5G icon even if it is in IDLE state. That is, the SIB1 message issued by the base station contains cell information. For a base station that does not issue the ULI, if the terminal obtains the allocated 5G resources, it will record the cell information in SIB1, and record this cell as the anchor cell as a supplement to Config.D; when it encounters the cell again, it displays the 5G icon directly even it is in the IDLE state.

Operation 11, the network deletes the B1 measurement event corresponding to the 5G.

Operation 12, the terminal uses the 5G resources to provide services, and the 5G resources providing services in a form of secondary cells similar to CA. The control plane is on the 4G side, and handover and reselection are controlled by RRC (Radio Resource Control) on the 4G side.

Generally, 5G is enough for all data. 4G is mainly responsible for IMS (IP Multimedia Subsystem) related services on a user plane, such as VoLTE (Voice over Long Term Evolution), short messages, etc.

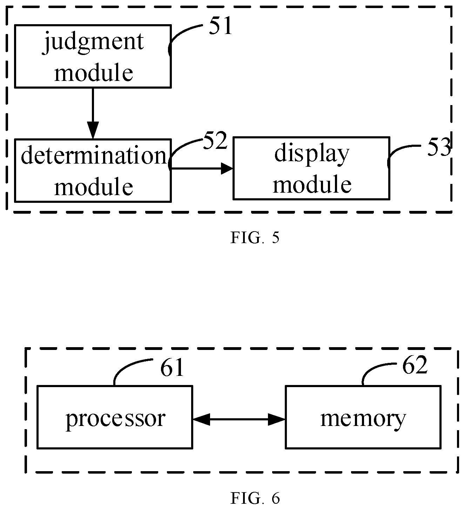

Fig. 5 is a schematic structure diagram of a device for displaying a 5G icon on a terminal according to the present disclosure. As shown in Fig. 5, the device may include: a judgment module 51 configured to judge whether a ULI from a base station is received, after accessing a 4G network; a determination module 52 configured to determine whether an SCG record is acquired, if the ULI from the base station is not received; and a display module 53 configured to display the 5G icon, when it is determined that the SCG record is acquired.

In an implementation, the judgment module 51 is configured to receive a SIB2 issued by the base station, and judge whether the SIB2 carries ULI. That is, the judgment module 51 can judge whether the base station issues the ULI according to the SIB2.

In an implementation, the determination module 52 is configured to use the 5G resources allocated by the base station to access a 5G network, and obtain an SCG record (i.e., an SCG allocation record) after the 5G network is successfully accessed. The above 5G resources are allocated by the base station, which can be allocated blindly by the base station, or allocated to the terminal after the terminal reports a B1 event. For the latter, the 5G resources can be acquired by the following operations: performing, by the determination module 52, 5G signal measurement; reporting the B1 event when the 5G signal meets a condition for reporting the B1 event; and acquiring the 5G resources after the B1 event is reported.

In an implementation, the device may further include a storage module configured to record the base station as an anchor base station after the 5G network is successfully accessed, so that the terminal displays the 5G icon directly when accessing the base station again.

The display module 53 is further configured to: query in the storage module whether the base station is an anchor base station when the terminal accesses the base station again, and directly display the 5G icon if the base station is the anchor base station.

That is to say, currently, whether the 5G icon will be displayed is judged based on Config.D, and the judgment basis for Config.D is ULI. Therefore, once the anchor base station does not issue a ULI, the terminal will not display the 5G icon. But this is inconsistent with the fact that the 5G resources can be allocated to the terminal actually. To this end, the terminal in the present disclosure further displays the 5G icon according to the SCG record, that is, regardless of whether the base station issues a ULI or not, as long as the base station can allocate 5G resources, the terminal will display the 5G icon according to an actual record, and will display the 5G icon in the future under such a base station, so that the user can know the actual situation of the network type used by the mobile terminal.

Fig. 6 is a schematic structure diagram of an equipment for displaying a 5G icon on a terminal according to the present disclosure. As shown in Fig. 6, the equipment may include a memory 62, a processor 61, and a computer program stored on the memory 62 and capable of running on the processor 61. When the computer program is executed by the processor 61, the processor 61 can implement the above method for displaying a 5G icon on a terminal. The memory 62 may be RAM, ROM, EEPROM, flash memory, or any other medium that can be used to store the desired information and that can be accessed by a computer. The processor 61 may be a central processing unit, digital signal processor, microprocessor, or the like.

The present disclosure further provides a computer readable medium storing thereon a program for displaying a 5G icon on a terminal. When the program for displaying a 5G icon on a terminal is executed by a processor, the processor can implement the above method for displaying a 5G icon on a terminal.

Those of ordinary skill in the art can understand that, all or some of the steps in the methods disclosed above, functional modules/units in the systems and devices can be implemented as software, firmware, hardware, and appropriate combinations thereof. In a hardware implementation, the division between functional modules/units mentioned in the above description does not necessarily correspond to the division of physical components; for example, one physical component may have multiple functions, or one function or step may be executed by several physical components cooperatively. Some or all physical components may be implemented as software executed by a processor, such as a central processing unit, digital signal processor or microprocessor, or as hardware, or as an integrated circuit, such as an application specific integrated circuit. Such software may be distributed on computer readable medium, which may include computer storage medium (or non-transitory medium) and communication medium (or transitory medium). As known to those of ordinary skill in the art, the term computer storage medium includes both volatile and nonvolatile, removable and non-removable medium implemented in any method or technology for storage of information (such as computer readable instructions, data structures, program modules or other data). The computer storage medium includes, but is not limited to, RAM, ROM, EEPROM, flash memory or other memory technology, CD-ROM, digital versatile disk (DVD) or other optical disk storage, magnetic cartridges, magnetic tape, magnetic disk storage or other magnetic storage devices, or any other medium that can be used to store desired information and can be accessed by a computer. In addition, as is well known to those of ordinary skill in the art, the communication medium typically includes computer readable instructions, data structures, program modules, or other data in a modulated data signal such as a carrier wave or other transport mechanism, and can include any information delivery medium.

Although the present disclosure has been described in detail above, the present disclosure is not limited thereto, and various modifications can be made by those skilled in the art based on the principles of the present disclosure. Therefore, all modifications made in accordance with the principles of the present disclosure should be construed as falling within the protection scope of the present disclosure.

## Claims

1. A method for displaying a 5G icon on a terminal, comprising:
after accessing a 4G network, judging, by the terminal, whether an upper layer indicator, called ULI, from a base station is received;
in response to the ULI from the base station being not received, determining, by the terminal, whether a secondary cell group, called SCG, record is acquired; and
in response to the SCG record being acquired, displaying, by the terminal, the 5G icon.

2. The method of claim 1, wherein judging, by the terminal, whether the ULI from the base station is received comprises:
receiving, by the terminal, a system information block 2, called SIB2, issued by the base station; and
judging, by the terminal, whether the SIB2 carries the ULI.

3. The method of claim 1, wherein determining, by the terminal, whether the SCG record is acquired comprises:
using, by the terminal, 5G resources allocated by the base station to access a 5G network; and
obtaining, by the terminal, the SCG record after successfully accessing the 5G network.

4. The method of claim 3, wherein
measuring, by the terminal, a 5G signal, and reporting a B1 event when the 5G signal meets a condition for reporting the B1 event; and
after reporting the B1 event, obtaining, by the terminal, the 5G resources allocated by the base station.

5. The method of any one of claims 1 to 4, further comprising:
after successfully accessing a 5G network, recording, by the terminal, the base station as an anchor base station.

6. The method of claim 5, further comprising:
when accessing a base station, querying, by the terminal, whether the base station is the anchor base station; and
in response to the base station being the anchor base station, displaying, by the terminal, the 5G icon directly.

7. The method of any one of claims 1 to 4, further comprising:
in response to the ULI from the base station being received, displaying, by the terminal, the 5G icon.

8. A device for displaying a 5G icon on a terminal, comprising:
a judgment module configured to judge whether an upper layer indicator, called ULI, from a base station is received, after accessing a 4G network;
a determination module configured to determine whether a secondary cell group, called SCG, record is acquired, in response to the ULI from the base station being not received; and
a display module configured to display the 5G icon, in response to the SCG record being acquired.

9. An equipment for displaying a 5G icon on a terminal, comprising a memory, a processor and a computer program stored on the memory and capable of running on the processor, wherein when the computer program is executed by the processor, the processor implements the method for displaying a 5G icon on a terminal according to any one of claims 1 to 7.

10. A computer readable medium storing thereon a computer program which, when executed by a processor, causes the processor to implement the method for displaying a 5G icon on a terminal according to any one of claims 1 to 7.
